# EUROPEAN PATENT APPLICATION

(11) **EP 1 803 342 A1**
(43) Date of publication of application: **04.07.2007**
(21) Application number: 06256593.2
(22) Date of filing: 27.12.2006
(51) Int. Cl.: A01D 34/56

(54) **Magnetically connected coupling assembly**

(30) Priority: 27.12.2005 US 319196
(71) Applicant: TEXTRON, INC., Providence, Rhode Islands 02903 (US)
(72) Inventor: Daly, Shawn J., Fort Mill South Carolina 29708 (US); Berkeley, James E., Pineville North Carolina 28134 (US)
(74) Representative: Hamer, Christopher K.

(57) **Abstract**

A motor coupling assembly (10) for a mower cutting unit includes a coupling ring (18) connected to the mower cutting unit. The coupling ring (18) includes a coupling face (46) having female ramp elements (48,50,52,54) created in the coupling face (46). Magnets (20,22,24,26) are positioned about the coupling face (46) each including a face positioned substantially coplanar with the coupling face. A ring member (16) connected to a motor (12) includes a ring face (28) having male ramp elements (30,32,34,36) equal in quantity to the female ramp elements. The male ramp elements extend outwardly from the ring face and engage within the female ramp elements. The ring face (28) is retained in contact with the coupling face (46) by only a magnetic force of the magnets. The ring member (16) is rotationally locked with respect to the coupling ring (18) by complete engagement of the male ramp elements within the female ramp elements.

## Description

### FIELD

The present disclosure relates to grass mowing platforms having one or more cutting blades and to a device and method for connecting a motor to a mowing platform operable to rotate the cutting blades.

### BACKGROUND

The statements in this section merely provide background information related to the present disclosure and may not constitute prior art.

Grass mowing platforms include both commercial and residential types of equipment, and commonly provide either a rotating blade or a reel blade cutting system. Residential platforms are most commonly of the rotating blade design. Reel mowers use a scissoring action, rather than a tearing action, to shear grass and like foliage. Such reel mowers typically provide a high quality cut, but require more maintenance than rotary mowers. Golf course superintendents prefer such mowers where appearance and healthy grass are important, such as on golf greens.

In a typical reel mower assembly, an attachment member, commonly called a bed bar or backer, attaches to the apparatus in rigid relationship to the reel, and a replaceable bed knife attaches to the bed bar. The bed knife is maintained parallel to the reel axis and in close proximity to the reel knives so that the reel and the bedknives achieve a quality sheering action. Typically, an adjustment mechanism allows movement of the bed bar relative to the reel so that the bed knife can be moved into proper rotationship with the rotating reel.

More specifically, conventional reel blade systems include a reel that is supported for rotation about a fixed axis. The reel is operably coupled to a power device, such as an electric, hydraulic or internal combustion motor, or a manual gear system, which serves to rotatably drive the reel relative to a fixed bed knife. A reel mower unit used in a typical golf course application may also use multiple reel mower assemblies. When powered by a dedicated motor, the motor is rotatably coupled to a blade assembly shaft and mounted for example using fasteners connected through a flange or mounting plate of the motor to a housing of the reel blade deck. The time required to remove and reinsert the motor fasteners adds to the time and cost of maintaining the reel blade systems. Additionally, fastener connections to the reel blade housing are prone to corrosion, which can add to the complexity and therefore the cost of removing/reinstalling the motor.

### SUMMARY

According to several embodiments, a motor coupling assembly for a mower cutting unit includes an attachment ring connectable to the mower cutting unit. The attachment ring has at least one female engagement element. A support ring is connectable to a motor. The support ring includes at least one male engagement element engageably receivable within the female engagement element. The support ring is rotationally locked with respect to the attachment ring by engagement of the male engagement element within the female engagement element.

According to additional embodiments, a motor coupling assembly for a mower cutting unit includes a coupling ring connected to the mower cutting unit. The coupling ring includes a coupling face having female ramp elements created in the coupling face. Magnets are positioned about the coupling face each Including a face positioned substantially coplanar with the coupling face. A ring member connected to a motor includes a ring face having male ramp elements equal in quantity to the female ramp elements. The male ramp elements extend outwardly from the ring face and engage within the female ramp elements. The ring face is retained in contact with the coupling face by only a magnetic force of the magnets. The ring member is rotationally locked with respect to the coupling ring by complete engagement of the male ramp elements within the female ramp elements.

According to still further embodiments, a method is provided for releasably connecting a motor to a mower device cutting unit using a coupling ring and a ring member of a motor. The method includes creating a plurality of female ramp elements in a substantially planar coupling face of the coupling ring. The method further includes connecting the coupling ring to the cutting unit having the coupling ring facing outwardly away from the cutting unit. The method still further includes extending a plurality of male ramp elements from a substantially planar ring face of the ring member. The method yet further includes abutting the coupling face with the ring face having the plurality of male ramp elements received in individual ones of the plurality of female ramp elements.

Further areas of applicability will become apparent from the description, provided herein. It should be understood that the description and specific examples are intended for purposes of illustration only and are not intended to limit the scope of the present disclosure.

### DRAWINGS

The drawings described herein are for illustration purposes only and are not intended to limit the scope of the present disclosure in any way. Throughout the specification, like reference numerals will refer to like elements.

Figure 1 is a perspective assembly view of a magnetically attached motor assembly according to various embodiments;

Figure 2 is a side elevational view of a connected motor assembly of Figure 1;

Figure 3 is partial cross sectional side elevational view taken at section 3-3 of Figure 2, showing a male ramp engaged with a female ramp;

Figure 4 is partial cross sectional elevational view taken at section 4-4 of Figure 2, showing a magnet of the present teachings recessed within a partial cavity of an attachment ring;

Figure 5 is an enlarged view of the partial cross sectional side elevational view of area 5 of Figure 3, showing the support and attachment rings in a fully engaged condition;

Figure 6 is a partial cross sectional elevational view similar to Figure 5, showing a partially engaged condition;

Figure 7 is a partial cross sectional elevational view similar to Figure 5, showing a disengaged condition;

Figure 8 is a front perspective view of a mowing unit employing the magnetically attached motor assembly according to various embodiments; and

Figure 9 is a front perspective view of a reel blade housing adapted to use the magnetically attached motor assembly according to various embodiments.

### DESCRIPTION OF VARIOUS EMBODIMENTS

The following description is merely exemplary in nature and is in no way intended to limit the present disclosure, application, or uses.

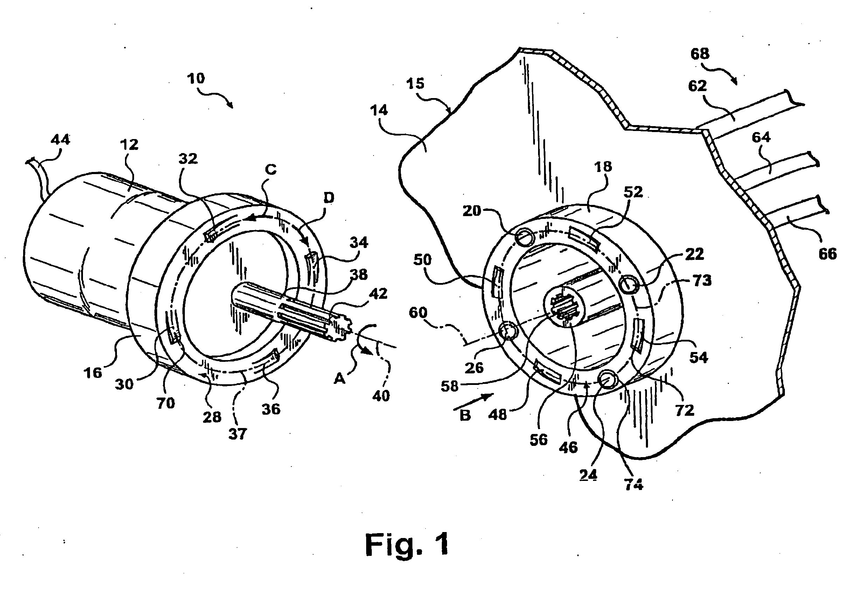

According to various embodiments and referring generally to Figure 1, a motor coupling assembly 10 includes a motor 12 connectably mounted to a housing wall 14 of a reel blade deck 15. Motor 12 can be one of a plurality of motor designs including an electric motor or a hydraulic motor. Motor 12 includes a support ring 16 which is coupled to a coupling or attachment ring 18 of housing wall 14.

The coupling force to retain support ring 16 in contact with attachment ring 18 is provided by a plurality of magnets which in some embodiments includes a first magnet 20, a second magnet 22, a third magnet 24, and a fourth magnet 26 disposed in attachment ring 18. The quantity of magnets identified herein is provided for example only. The quantity can vary from at least 1 to greater than 4 depending on several features including, but not limited to the size of motor 12, the weight of motor 12, the amount of torque produced by motor 12, and the material of magnets 20 through 26.

Support ring 16 of motor 12 further includes a substantially planar support ring face 28. A plurality of male ramps are disposed concentrically at predetermined intervals about support ring face 28 which in some embodiments include a first male ramp 30, a second male ramp 32, a third male ramp 34, and a fourth male ramp 36. The quantity of male ramps provided on support ring face 28 can be varied from that shown at the discretion of the designer. The male ramps are substantially equally spaced about a circle 37 on support ring face 28, therefore the exemplary quantity of four male ramps 30, 32, 34, and 36 are spaced from each other by substantially 90 degree increments. Motor 12 further includes a drive shaft 38 extending outwardly from support ring 16. Drive shaft 38 rotates in a direction of rotation "A" about an axis of rotation 40. A plurality of splines 42 are provided at an outwardly extending end of drive shaft 38 extending substantially parallel to axis of rotation 40. A power input element 44 is also provided with motor 12. Power input element 44 corresponds to electrical wiring if motor 12 is an electric motor or one or more tubes or pipes for hydraulic fluid if motor 12 is a hydraulic motor.

Attachment ring 18 further includes a substantially planar attachment ring face 46 having a plurality of female ramps disposed about attachment ring face 46. In the example shown, four female ramps including each of a first female ramp 48, a second female ramp 50, a third female ramp 52, and a fourth female ramp 54 are provided. Each of the female ramps 48 through 54 are spaced and sized to engagingly receive one of the male ramps 30 through 36. A coupling 56 extends through a center area of attachment ring 18. Coupling 56 includes a plurality of mating splines 58 which engagably receive the splines 42 of drive shaft 38. Coupling 56 is rotatably disposed with respect to housing wall 14 and defines a blade rotational axis 60. Coupling 56 is operable to receive splines 42 of drive shaft 38 in a shaft insertion direction "B". Each of a plurality of blades 62, 64, 66 is disposed on a blade assembly 68 for reel blade deck 15. Blade assembly 68 is connectable to coupling 56 such that rotation of drive shaft 38 of motor 12 in direction of rotation "A" concomitantly rotates blade assembly 68. A drive torque of motor 12 is therefore transferred from drive shaft 38 to coupling 56 and from coupling 56 to blade assembly 68.

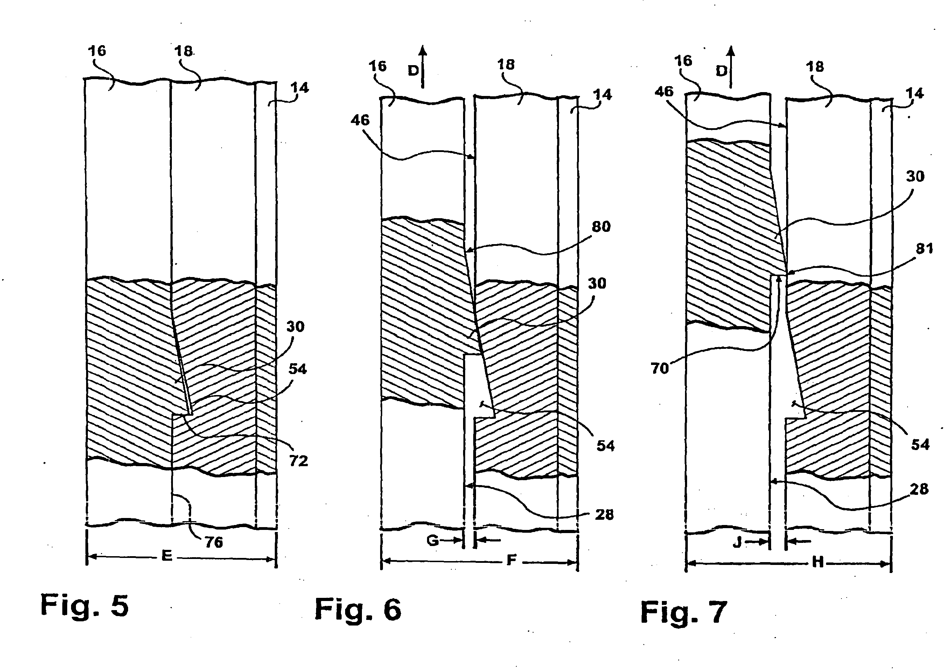

Each of male ramps 30, 32, 34, 36 includes an end face 70 which contacts an end wall 72 of each of the female ramps 48, 50, 52, 54 when male ramps 30, 32, 34, 36 are fully engaged with corresponding ones of the female ramps 48, 50, 52, 54. Female ramps 48, 50, 52, 54 and magnets 20 through 26 are each equally spaced from each other and disposed about a circle 73 having a diameter substantially equal to a diameter of circle 37 of support ring 16. Contact between end faces 70 and end walls 72 prevents further rotation of motor 12 in an engagement direction of rotation "C" of support ring 16. When end faces 70 contact end walls 72, further rotation of support ring 16 due to rotational torque of motor 12 is also prevented. When fully engaged, support ring face 28 is substantially brought into physical contact with attachment ring face 46 and held in engagement by each of first, second, third and fourth magnets 20, 22, 24, 26. To permit a substantially flush engagement between support ring face 28 and attachment ring face 46, each of the magnets 20, 22, 24, 26 are disposed within a cavity 74 created within attachment ring face 46. Magnets 20, 22, 24, 26 are retained within their respective cavity 74 by press fit, adhesive, threadable engagement, heat bonding, or similar attachment technique. To disconnect motor 12 from attachment ring 18, motor 12 with support ring 16 is rotated in a disengagement direction of rotation "D" which will be described in further detail in reference to Figures 5 through 7.

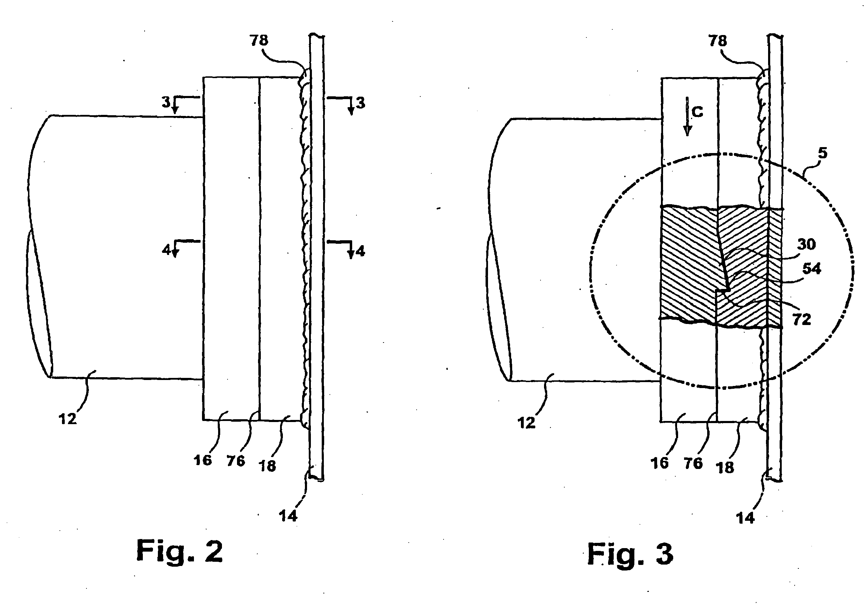

As best seen in reference to Figure 2, when meter 12 is fully engaged with attachment ring 18, an abutting joint 76 is created. As also seen in reference to Figure 2, attachment ring 18 is fixedly connected to housing wall 14, for example using a weld joint 78. Other connection types can also be used between attachment ring 18 and housing wall 14 including but not limited to adhesives, fasteners, and similar methods.

Referring now generally to Figure 3, in the fully engaged condition defining abutting joint 76, exemplary first male ramp 30 is fully engaged within exemplary fourth female ramp 54 having end face 70 of first male ramp 30 engaged with and contacting end wall 72. It is noted that first male ramp 30 is shown having a generally continuously tapering side leading to end face 70. This configuration can also be varied at the discretion of the designer. For example, a curved surface can be used for each of the male ramps leading to end face 70. A corresponding curved face is used In these embodiments for each of the female ramps 48, 50, 52, 54. Once in the fully engaged position, a person of skill in the art should recognize that further rotation in engagement direction of rotation "C" is prevented by the design of the male ramps and female ramps of the present teachings.

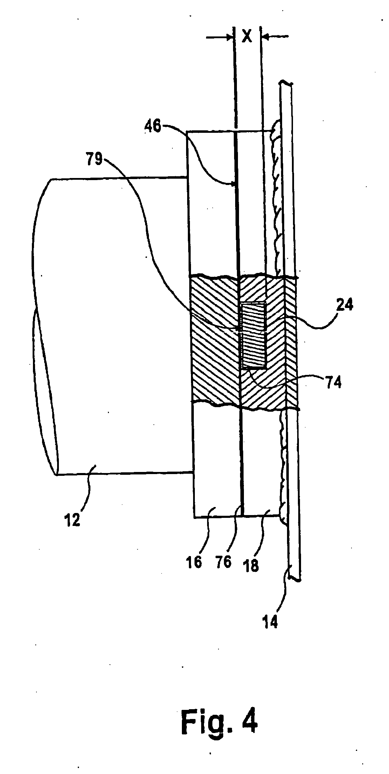

Referring generally now to Figure 4, some embodiments include third magnet 24 positioned within a cavity 74 of attachment ring 18. A depth "X" of cavity 74 substantially equals a thickness of magnets 20, 22, 24 and 26. This provides for a substantially flush or coplanar arrangement between an exposed magnet face 79 and attachment ring face 46.

Referring now to Figures 5 through 7, disconnection of motor 12 from support ring 16 is shown. Figure 5 identifies the fully engaged condition defining an assembly width "E" of support ring 16, attachment ring 18 and housing wall 14. Assembly width "E" cannot be further reduced because of contact at abutting joint 76. To remove motor 12 and overcome the magnetic attractive force of the various magnets 20, 22, 24 and 26, support ring 16 is rotated in disengagement direction of rotation "D". As best seen in Figure 6, an intermediate position width "F" is defined when first male ramp 30 is partially withdrawn from fourth female ramp 54. A separation distance "G" gradually increases when support ring 16 is rotated in the disengagement direction of rotation "D". Separation distance "G" represents a distance between support ring face 28 and attachment ring face 46. Separation distance "G" gradually increases with continued rotation of support ring 16 in the disengagement direction of rotation "D", thereby increasing the distance between support ring face 28 and any of the magnets 20, 22, 24 and 26 and decreasing the magnetic attraction force. Sliding contact between a sloping face 80 of each of the male ramps 30, 32, 34, 36 against a corresponding surface of the female ramps 48, 50,52, 54 therefore affects separation distance "G".

When support ring 16 is rotated in the disengagement direction of rotation "D" to position a ramp apex 81 in contact with attachment ring face 46, a full separation distance "J" between support ring face 28 and attachment ring face 46 results. At this time, the male ramps (exemplified by male ramp 30) are completely withdrawn from the female ramps (exemplified by fourth female ramp 54). Full separation distance "J" therefore also represents a total height of each end face 70. This height is predetermined by the designer to sufficiently reduce the magnetic attraction force between magnets 20, 22, 24 and 26 and support ring face 28 to permit manual release of motor 12 from attachment ring 18.

Materials for support ring 16 and attachment ring 18 can be selected to increase or decrease the net attractive force of magnets 20, 22, 24 and 26. For example, support ring 16 can be provided from a magnetic material including but not limited to a ferrous material such as steel, stainless steel, and the like. Material for attachment ring 18 can be the same as support ring 16 to maximize the coupling force of magnets 20, 22, 24 and 26. If the material of the reel deck or mower cutting unit is steel, selecting a steel material for the attachment ring 18 provides for a welded attachment between the met deck and attachment ring 18. Alternately, to make disassembly easier by reducing the net magnetic attraction force, attachment ring 18 can be created from a nonmagnetic material such as aluminum or brass. If the material of the reel deck or mower cutting unit is aluminum, selecting aluminum material for the attachment ring 18 provides for a welded attachment between the reel deck and attachment ring 18. Material for magnets 20, 22, 24 and 26 can be any suitable magnet material including but not limited to permanent magnet rare earth materials including neodymium, ferrous material, ceramics, and/or composite material.

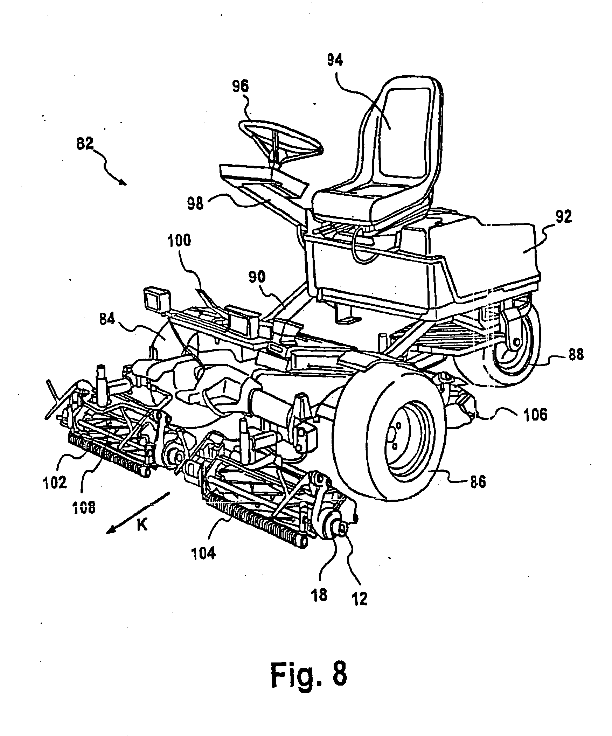

Referring now to Figure 8, application of the motor coupling assemblies 10 of the present invention is shown with reference to an exemplary mower assembly 82. Mower assembly 82 includes a first driven wheel 84, a second driven wheel 86 and a steerable wheel 88. Each of the wheels 84, 86 and 88 are connected to a frame 90. Frame 90 also supports a propulsion unit housing 92 which provides a propulsion unit (not shown) such as a gasoline engine or an electric motor and batteries. A seat 94 is also indirectly supported from frame 90 for use by an operator of mower assembly 82. A steering device 96 connected for example to an L-shaped post 98 is provided for steering mower assembly 82. One or more pedals 100 can also be provided to serve for example as throttle or break controls.

In various embodiments, mower assembly 82 includes cutting units such as a first reel deck 102, a second reel deck 104, and a third reel deck 106. Each of the first, second, and third reel decks 102, 104, 106 include a blade assembly 108 operable when mower assembly 82 is propelled in a mower operating direction "K". Each of the first, second, and third reel decks 102, 104, 106 are also movable with respect to frame 90 between a cutting position (shown) and a lifted or stored position (not shown).

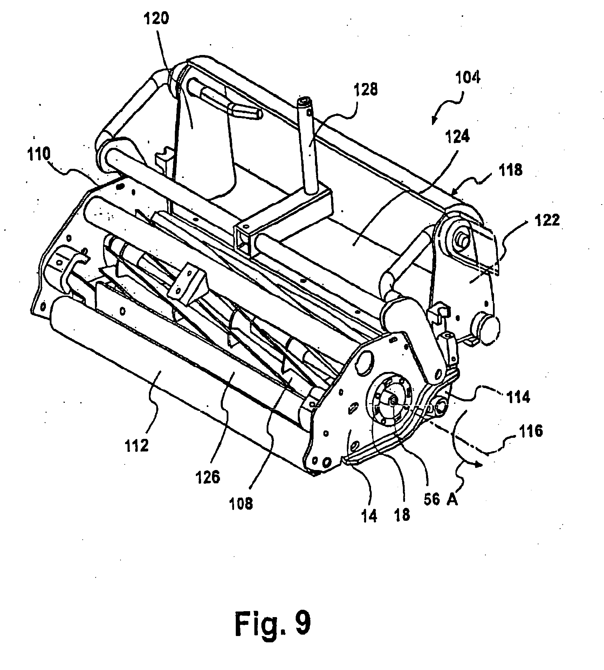

Referring now generally to Figure 9, second reel deck 104 is shown in greater detail. Second reel deck 104 includes blade assembly 108 rotatably connectable at opposite ends to housing wall 14 and an opposed second housing wall 110. A fixed position roller 112 and an adjustable position roller 114 are also commonly provided to permit motion and control of cutting height of the reel deck during cutting operations. Each blade assembly 108 is rotatably disposed about a blade assembly axis of rotation 116 which corresponds to blade rotational axis 60 and is coaxially aligned with drive shaft axis of rotation 40 shown in Figure 1. In the example shown, blade assembly 108 is operated by rotating coupling 56 about direction of rotation "A".

Each reel deck commonly includes a collection housing 118. Collection housing 118 is bounded at opposite ends by a first collection wall 120 and a second collection wall 122. Grass clippings generated by rotation of blade assembly 108 are collected in a collection region 124 of collection housing 118. A blade scraper 126 can also be used to remove excess grass clippings from blade assembly 108. Each reel deck is also commonly provided with a lift/support member 128. Lift/support member 128 is mechanically connectable to mower assembly 82 for raising or lowering the reel deck between each of the mowing and stowed positions. Motor 12 is not shown in Figure 9 to provide a view of the general position of support ring 16 when motor 12 is removed for maintenance of blade assembly 108 or reel deck 104 in general.

A magnetically attached coupling assembly of the various embodiments provides, but is not limited to, several various advantages. By eliminating fasteners commonly used to connect a motor to a reel deck assembly, disassembly and reassembly of the motor is simplified. By providing magnets to maintain the connection between the motor and the reel deck assembly, both the assembly and disassembly steps are simplified and require only a rotation of the motor, with no use of tools. Male and female ramps of the present teachings provide a positive engaged position for the motor and also provide a mechanical advantage to help overcome the magnetic force of the magnets holding the support ring of the motor to the attachment ring of the reel deck. The splines at the end of the motor drive shaft align with and positively engage the coupling centrally positioned inside the attachment ring. The spline connections provide a positive engagement for transmission of the force from the motor to the blade assembly while permitting a sliding engagement and disengagement for the motor drive shaft. A magnetically attached coupling assembly of the various embodiments can also be adapted to rotate the cutting blade or blades of a rotary mower assembly.

The description of the present teachings is merely exemplary in nature and, thus, variations that do not depart from the gist of the teachings are intended to be within the scope of the disclosure. Such variations are not to be regarded as a departure from the spirit and scope of the teachings.

## Claims

1. A motor coupling assembly for a mower cutting unit, comprising:
an attachment ring connectable to the mower cutting unit, the attachment ring having at least one first engagement element; and
a support ring connectable to a motor, the support ring including at least one second engagement element engageably mating with the first engagement element;
wherein the support ring is rotationally locked with respect to the attachment ring by engagement of the second engagement element within the first engagement element.

2. The assembly of Claim 1, further comprising at least one magnet,
wherein the support ring is retainable in contact with the attachment ring by a magnetic force of the magnet.

3. The assembly of Claim 2, further comprising:
a mating face of the attachment ring operable to contact the support ring, the mating face having the first engagement element formed therein; and
a recess formed in the mating face operable to receive the magnet;
wherein an outward facing surface of the magnet is positionable substantially coplanar with respect to the mating face of the attachment ring.

4. The assembly of Claim 3, wherein the at least one first engagement element further comprises a plurality of first engagement elements each disposed on a first positioning circle defined on the mating face of the attachment ring.

5. The assembly of Claim 4, further comprising a substantially planar ring face of the support ring operable to abuttingly contact the mating face of the attachment ring, the second engagement element outwardly extending from the ring face.

6. The assembly of Claim 5, wherein the at least one second engagement element further comprises a plurality of second engagement elements equal in quantity to a quantity of the first engagement elements, each of the second engagement elements disposed on a second positioning circle defined on the ring face of the support ring and spaced in correlation to a spacing of the first engagement elements.

7. The assembly of Claim 6, wherein the first and second positioning circles are substantially equal in diameter.

8. The assembly of Claim 6, wherein the first and second positioning circles are each concentrically disposed about a common rotational axis of the motor when the support ring is rotationally locked with respect to the attachment ring.

9. The assembly of any one of Claims 1 to 8, wherein the first engagement element further comprises an end wall operable to positively engage the second engagement element when the second engagement element is in a fully engaged position.

10. The assembly of any one of Claims 1 to 9, wherein the second engagement element further comprises an end face engageable with the end wall of the first engagement element in the fully engaged position.

11. A motor coupling assembly for a mower cutting unit, comprising:
a coupling ring connectable to the mower cutting unit, the coupling ring including a substantially planar coupling face having a plurality of first ramp elements created in the coupling face;
a plurality of magnets disposed about the coupling face, the plurality of magnets all having an outwardly positioned magnet face positionable substantially coplanar with the coupling face; and
a ring member connectable to a motor, the ring member having a substantially planar ring face including a plurality of second ramp elements equal in quantity to a quantity of the first ramp elements, the second ramp elements extending outwardly from the ring face and engageably receivable within corresponding ones of the plurality of first ramp elements;
wherein the ring face of the ring member is retainable in contact with the coupling face by only a magnetic force of the magnets, and the ring member is rotationally locked with respect to the coupling ring by a complete engagement of the second ramp elements within the first ramp elements.

12. The assembly of Claim 11, further comprising a coupling element positioned within and rotationally disposed with respect to the coupling ring.

13. The assembly of Claim 12, further comprising a blade assembly wherein the coupling element is connected to the blade assembly, the coupling element and the blade assembly being rotatable by the motor.

14. The assembly of Claim 12 or Claim 13, further comprising a plurality of splines created in the coupling element, the plurality of splines engage able with a plurality of mating splines disposed on a motor shaft.

15. The assembly of any one of Claims 11 to 14, wherein at least the ring member comprises a ferrous material.

16. The assembly of any one of Claims 11 to 15, further comprising a plurality of recesses created in the coupling face operable to receive the magnets.

17. The assembly of any one of Claims 11 to 16, further comprising:
a first positioning circle defined on the coupling face of the coupling ring having the plurality of first ramp elements disposed along the first positioning circle; and
a second positioning circle defined on the ring face of the support member, the plurality of second ramp elements being equally spaced about the second positioning circle and spaced in correlation to a spacing of the first ramp elements.

18. The assembly of Claim 17, wherein the plurality of magnets are spatially disposed along the first positioning circle, individually ones of the plurality of magnets being interposed between successive ones of the plurality of first ramp elements.

19. A grass cutting mower, comprising:
at least one mower deck; and
a motor coupling assembly for connecting an electric motor to the mower deck, the motor coupling assembly including:
an attachment ring connectable to the mower deck, the attachment ring having at least one female-shaped engagement element; and
a support ring connectable to the electric motor the support ring including at least one male-shaped engagement element engageably mating with the female-shaped engagement element of the attachment ring;
wherein the support ring is rotationally locked with respect to the attachment ring by engagement of the male-shaped engagement element within the female-shaped engagement element.

20. The mower of Claim 19, further comprising:
a first positioning cirde defined on the attachment ring wherein the at least one female-shaped engagement element includes a plurality of female-shaped engagement elements equidistantly disposed about the first positioning circle; and
a second positioning circle defined on the support ring wherein the at least one male-shaped engagement element includes a plurality of male-shaped engagement elements equidistantly disposed about the second positioning circle and aligned with individual ones of the fernale-shaped engagement elements.

21. The mower of Claim 20, further comprising:
a ferrous material selected for the support ring; and
a plurality of magnets spatially disposed along the first positioning circle of the attachment ring, individual ones of the plurality of magnets received in individual ones of a plurality of recesses created in the attachment ring and interposed between successive ones of the plurality of female-shaped engagement elements, a magnetic force of the magnets being solely operable to releasably couple the attachment ring and the support ring.

22. The mower of Claim 21, further comprising;
a substantially planar mating face of the attachment ring; and
an outward facing surface of each of the magnets being alignable substantially co-planar to the mating face of the attachment ring when the magnets are positioned in the recesses.

23. The mower of any one of Claims 19 to 22, wherein the at least one mower deck further comprises a reel type mower deck having a plurality of reel blades operably rotated by the electric motor.

24. The mower of any one Claims 19 to 22, wherein the at least one mower deck further comprises a rotary mower deck having at least one rotary blade operably rotated by the electric motor.

25. A method for releasably connecting a motor to a mower device cutting unit using a coupling ring and a ring member of a motor, the method comprising:
creating a plurality of female ramp elements in a substantially planar coupling face of the coupling ring;
connecting the coupling ring to the cutting unit having the coupling ring facing outwardly away from the cutting unit;
extending a plurality of male ramp elements from a substantially planar ring face of the ring member; and
abutting the coupling face with the ring face having the plurality of second ramp elements received in individual ones of the plurality of first ramp elements.

26. The method of Claim 25, further comprising disposing a plurality of magnets about the coupling face.

27. The method of Claim 26, further comprising engaging the ring face with the coupling face using only a magnetic force of the magnets.

28. The method of Claim 26, further comprising creating a plurality of cavities in the coupling face operable to receive the plurality of magnets.

29. The method of any one of Claims 25 to 28, further comprising rotationally locking the ring member with respect to the coupling ring by contact between an end face of the second ramp elements with an end wall of the first ramp elements.

30. The method of any one of Claims 25 to 29, further comprising positioning an outwardly facing magnet face of the plurality of magnets substantially coplanar with the coupling face.

31. The method of any one of Claims 25 to 30, further comprising limiting a quantity of the second ramp elements equal to a quantity of the first ramp elements.
